# EUROPEAN PATENT APPLICATION

(11) **EP 1 619 412 A1**
(43) Date of publication of application: **25.01.2006**
(21) Application number: 04716025.4
(22) Date of filing: 01.03.2004
(51) Int. Cl.: F16H 21/10, B29C 45/40

(54) **STEPWISE DRIVING FORCE TRANSMISSION DEVICE**

(30) Priority: 25.04.2003 JP 2003122095
(71) Applicant: Misumi Corporation, Koto-ku, Tokyo 135-8458 (JP)
(72) Inventor: ICHIKAWA, Izumi, c/o Misumi Corporation, Koto-ku, Tokyo 1358458 (JP)
(74) Representative: Klingseisen, Franz
(86) International application number: PCT/JP2004/002492
(87) International publication number: WO 2004/097257

(57) **Abstract**

A stepwise driving force transmission device, comprising a tubular hollow rod (1) having guide holes (11a) passed through the tip end peripheral wall (11) thereof to the inside and outside of the peripheral wall (11), a bush (2) having an inner peripheral surface (2a) fitted to the outer peripheral surface (11h) of the hollow rod (1), a push pin (3) having an outer peripheral surface (3a) fitted to the inner peripheral surface (11e) of the hollow rod (1), and cams (4) installed in the guide holes (11a) of the hollow rod (1) so as to be moved to the inside and outside of the peripheral wall. The stepwise driving force transmission device also comprises locking members (5) inserted from the tip face (11b) of the hollow rod (1) and locked to the cams (4) stored in the guide holes (11a) to allow the movement of the cams (4) to the inside and outside of the hollow rod (1) and prevent the cams from coming out of the guide holes (11a).

## Description

### Technical Field

The present invention relates to a stepwise driving force transmission device which is installed in a molding die and functions as a quick returning device for an ejector plate or a two-stage ejecting device for an ejector pin.

### Background Art

As a stepwise driving force transmission device, there is known a device including a hollow rod (sleeve) formed into a cylindrical shape and having guide holes passing through the tip end peripheral wall thereof in the thickness direction of the peripheral wall, spherical cams (balls) installed in the guide holes of the hollow rod so as to be movable to the thickness direction and having a diameter larger than the thickness of the peripheral wall of the hollow rod, a bush having an inner peripheral surface fitted to the outer peripheral surface of the hollow rod, and a push pin (pusher pin) having an outer peripheral surface fitted to the inner peripheral surface of the hollow rod (for example, refer to Japanese Utility Model Publication No. 1-4501).

The bush is configured so as to be fitted from the tip end side of the hollow rod, and configured so that the spherical cams are projected inward from the inner peripheral surface of the hollow rod by the inner peripheral surface thereof. On the other hand, the push pin is configured so as to be inserted into the hollow rod from the tip end side, and configured so that the spherical cams are projected outward from the outer peripheral surface of the hollow rod by the outer peripheral surface thereof.

Furthermore, the bush is formed with a concave portion, which receives projecting portions of the spherical cams projected outward by the push pin, in a base end portion located on the same side as the base end portion of the hollow rod when the bush is fitted to the hollow rod, namely, a base end portion that is one end portion in which the fitting is started from the tip end side of the hollow rod.

The stepwise driving force transmission device configured as described above functions as a quick returning device for an ejector plate by installing the hollow rod, the bush, and the spherical cams in a moving die of an injection molding machine and installing the push pin in a fixed die of the injection molding machine.

Specifically, the hollow rod is driven in the axial direction by the ejector plate by connecting the base end portion thereof to the ejector plate in the moving die. The bush receives the tip end portion of the hollow rod driven by the ejector plate by fixing the base end portion thereof at a position shifting to the fixed die side in the moving die such that the base end portion thereof is directed to the ejector plate side. The push pin is inserted into the hollow rod via the bush at the time of die closing by fixing the base end portion thereof to the fixed die so that a portion on the tip end side projects to the moving die side from the fixed die.

As described above, in the stepwise driving force transmission device installed so as to function as the quick return device for the ejector plate, in a die opening state in which the fixed die and the moving die face to each other with a predetermined distance being provided therebetween, the push pin is in a state of completely getting out of the hollow rod and the bush. From such a state, when an ejector rod of the injection molding machine advances, the ejector plate is moved in the ejecting direction, so that the tip end portion of the hollow rod moves to the tip end side in the bush.

Specifically, since the push pin is not present in the hollow rod as described above, the spherical cams can be moved to the inside of the hollow rod, so that the hollow rod can be moved smoothly to the tip end side in the bush by being driven by the ejector plate. Also, the ejector pin connected to the ejector plate also ejects to the fixed die side from the moving die, by which a molded product adhering to the molding surface of the moving die can be separated from the molding surface.

Next, when the ejector rod of the injectionmoldingmachine is retracted, usually, the ejector plate is automatically returned to the return position before ejection by a return spring incorporated in the moving die. Therefore, the hollow rod becomes in a state such that the tip end portion thereof moves to the base end side of the bush, and a portion having the spherical cams moves to a position corresponding to the concave portion of the bush.

On the other hand, when mold closing is performed by moving the moving die toward the fixed die, the push pin passes through the bush and intrudes into the hollow rod. In this case, the portion having the spherical cams of the hollow rod moves to the position corresponding to the concave portion of the bush. Therefore, the push pin pushes out the spherical cams to the outside of the hollow rod so as to be capable of entering into the hollow rod easily.

In the case where the ejector plate is returned immediately by the return spring in such a manner, the stepwise driving force transmission device does not function as the quick returning device for the ejector plate.

However, if the return spring is broken or weakened, the ejector plate sometimes does not return or returns slowly.

In this case, the tip end portion of the hollow rod is in a state of being left in the inner peripheral surface of the bush, and the spherical cams have been moved to the inside of the hollow rod. Therefore, the push pin comes into contact with the spherical cams, and a force for pushing out the hollow rod to the base end side of the bush acts via the spherical cams, so that the ejector plate moves to the return position. When the ejector plate reaches the return position in such a manner, the portion having the spherical cams of the hollow rod comes to the position corresponding to the concave portion of the bush, so that the spherical cams can move to the outside of the hollow rod. Therefore, the force acting on the hollow rod via the spherical cams is released, and also the push pin enters into the hollow rod.

Thus, the ejector pin does not remain in a state of sticking out from the moving die at the time of die closing, so that the ejector pin etc. can be prevented from being damaged.

Also, it is possible to prevent the ejector pin from being damaged by applying a configuration in which a return pin, which is connected to the ejector plate and projected from the moving die with the same stroke as that of the ejector pin, is provided, and the return pin is subject to a force acting from the fixed die at the time of die closing so that the ejector plate is compulsorily returned to the return position.

In this case as well, the ejector pin may be damaged, if a slide core moves before the ejector plate returns completely.

In the case where the above-described stepwise driving force transmission device is used, before the slide core comes into contact with the ejector pin, the length etc. of the push pin are adjusted to return the ejector plate to the original position, so that the damage to the ejector pin due to the slide core can be prevented surely.

However, the above-described stepwise driving force transmission device has a drawback in that the spherical cams easily come off guide holes in the hollow rod. Therefore, there arises a problem in that the operation for assembling the stepwise driving force transmission device to the molding die is troublesome.

### Disclosure of the Invention

The present invention has been made in view of the above circumstances, and accordingly an object thereof is to provide a stepwise driving force transmission device in which cams are prevented from coming off hollow rods, and the assembling operation thereof to a molding die can be performed easily.

To achieve the above object, according to a first feature of the present invention, there is provided a stepwise driving force transmission device comprising: a hollow rod of a tubular shape having guide holes passing through a peripheral wall of a tip end portion thereof in a thickness direction of the peripheral wall; a bush having an inner peripheral surface fitted to a outer peripheral surface of the hollow rod; a push pin having an outer peripheral surface fitted to the inner peripheral surface of the hollow rod; and cams which are provided in the guide holes of the hollow rod so as to be movable in the thickness direction, and are configured so that when an outer edge thereof is moved inward by the inner peripheral surface of the bush, an inner edge portion thereof projects inward from the inner peripheral surface of the hollow rod, and when an inner edge thereof is moved outward by the outer peripheral surface of the push pin, an outer edge portion thereof projects outward from the outer peripheral surface of the hollow rod, wherein the bush is provided with a concave portion, which receives the outer edge portion of the cams projected outward by the outer peripheral surface of the push pin, at a inner periphery of a base end portion located on the same side as a base end portion of the hollow rod when the bush is fitted to the hollow rod, and the hollow rod is provided with locking members which are inserted from the tip end of the hollow rod to engage the cams, and are configured so as to allow the cams to move in the thickness direction and to prevent the cams from coming off the guide holes, as described in claim 1.

According to the above configuration, the hollow rod and the bush are fitted to each other such that the cams are located on the inner peripheral surface of the bush. When the push pin is inserted into the hollow rod from the tip end side of the hollow rod, since the inner edge portions of the cams are projected to the inside of the hollow rod by the bush, the driving force of the push pin is transmitted to the hollow rod via the cams, and hence the hollow rod moves toward the base end side thereof. That is to say, the hollow rod is driven so as to move relative to the bush. When the portion having the cams of the hollow rod reaches the concave portion in the base end portion of the bush, since the cams are projected into the concave portion by the push pin, the driving force acting on the hollow rod from the push pin is released, and thus the push pin enters into the hollow rod. That is to say, although the push pin moves continuously, the driving force acting on the hollow rod from the push pin is completely released from the time when the hollow rod reaches a predetermined position with respect to the bush.

For example, the base end portion of the hollow rod is fixed to an ejector plate of a moving die in a molding die, so that the tip end portion of the hollow rod is directed to a fixed die side of the molding die. The bush is fixed at a position close to the fixed die in the moving die, so that the base end portion of the bush is directed to the ejector plate side, and the tip end portion of the hollow rod driven by the ejector plate can be received by the bush. The base end portion of the push pin is fixed to the fixed die, so that the tip end side portion thereof is projected from the fixed die to the moving die side, and the push pin is inserted into the hollow rod via the bush at the time of die closing. By the structure described above, the stepwise driving force transmission device can be allowed to function as a quick return device for the ejector plate.

On the other hand, the hollow rod and the bush are fitted to each other so that the cams are set in a state of being located in the concave portion of the bush, and the push pin is inserted from the base end side of the hollow rod and set in a state of passing through the cam portion. If the hollow rod is driven from such a state to be moved to the tip end side thereof, since the outer edge portions of the cams are projected into the concave portion of the bush by the push pin, the driving force is transmitted from the hollow rod to the bush via the cams, and thus the bush moves toward the tip end side together with the hollow rod. When the hollow rod and the bush move to a position at which the cams get out of the tip end of the push pin, the cams can move to the inside of the hollow rod, so that the driving force of the hollow rod is not transmitted to the bush, and hence the hollow rod enters into the bush. That is to say, although the hollow rod moves continuously, the driving force acting on the bush from the hollow rod is completely released from the time when the hollow rod reaches a predetermined position with respect to the push pin.

For example, the base end portion of the hollow rod is connected to a first-stage ejector plate of a moving die in a molding die and the tip end portion thereof is directed to a fixed die side of the molding die. The bush is fixed to a second-stage ejector plate located on the fixed die side from the first-stage ejector plate, so that the base end portion of the bush is directed to the first-stage ejector plate, and the tip end portion of the hollow rod driven by the first-stage ejector plate can be received by the bush. The base end portion of the push pin is fixed to the fixed die and is inserted into the hollow rod from the base end side of the hollow rod. By the structure described above, the stepwise driving force transmission device can be allowed to function as a two-stage ejecting device for an ejector pin.

That is to say, by driving the first-stage ejector plate in the ejecting direction, a force acting on the first-stage ejector plate is transmitted to the second-stage ejector plate via the hollow rod, the cams, and the bush. Accordingly, a first-stage ejecting operation in which both of the first-stage and second-stage ejector plates move is performed. When the first-stage and second-stage ejector plates move through a predetermined distance, the cams get out of the tip end of the push pin, so that the force for driving the first-stage ejector plate is not transmitted to the second-stage ejector plate. Hereby, a second-stage ejecting operation in which only the first-stage ejector plate moves is performed. Therefore, by attaching the ejector pin to each of the first-stage and second-stage ejector plates, a two-stage ejecting operation with different strokes can be performed.

Also, in the above-described stepwise driving force transmission device, the locking members can prevent the cams from coming off the guide holes of the hollow rod, which provides an advantage that the assembling to the molding die becomes easy. In addition, since the locking members are inserted from the tip end side of the hollow rod, there is no hindrance to the fitting of the hollow rod and the bush and the fitting of the hollow rod and the push pin.

Also, the peripheral wall is allowed to remain between the guide holes and the tip end of the hollow rod by providing the guide holes in the tip end portion of the hollow rod, so that a decrease in strength of the tip end portion of the hollow rod due to the provision of the guide holes can be prevented as far as possible. That is to say, the strength of the tip end portion of the hollow rod can be increased as compared with the case where a concave-shaped groove is formed from the tip end of the hollow rod toward the base end side, and the guide holes are formed in this groove portion.

A second feature of the stepwise driving force transmission device in accordance with the present invention is, as described in claim 2, that the locking member is composed of a locking pin which is driven from the tip end of the hollow rod, and a tip end portion thereof in the driven direction projects into the guide hole, and the cam is provided with a locking groove in a surface facing to the tip end side of the hollow rod, such that the locking groove engages with the tip end portion of the locking pin to allow the cam to move in the thickness direction of the peripheral wall of the hollow rod and prevent the cam from coming off the guide hole.

According to the above configuration, by driving the locking pin from the tip end of the hollow rod such that the cam is inserted in the guide hole, the tip end portion of the locking pin can be engaged with the locking groove of the cam. Therefore, the cam can be assembled easily so as to prevent the cam from coming off the guide hole.

A third feature of the stepwise driving force transmission device in accordance with the present invention is, as described in claim 3, that the locking member is composed of a locking screw which is screwed in from the tip end of the hollow rod, and a tip end portion thereof in the screwed direction projects into the guide hole, and the cam is provided with a locking groove in a surface facing to the tip end side of the hollow rod, such that the locking groove engages with the tip end portion of the locking screw to allow the cam to move in the thickness direction of the peripheral wall of the hollow rod and prevent the cam from coming off the guide hole.

According to the above configuration, by screwing the locking screw from the tip end of the hollow rod such that the cam is inserted in the guide hole, the tip end portion of the locking screw can be engaged with the locking groove of the cam. Therefore, the cam can be assembled easily so as to prevent the cam from coming off the guide hole. In addition, the tip end portion of the locking screw can be disengaged from the locking groove of the cam by turning the locking screw, which provides an advantage that the cam can be replaced easily.

A fourth feature of the stepwise driving force transmission device in accordance with the present invention is, as described in claim 4, that the hollow rod is provided with locking elongated holes which pass through from a tip end thereof to the guide holes, and are formed long along the thickness direction in which the cam moves, and the locking member is composed of a locking pin which is driven into the cam through the locking elongated hole, a base end portion thereof on the opposite side to the driven direction projecting into the locking elongated hole, and allows the cam to move in the thickness direction and prevents the cam from coming off the guide hole.

According to the above configuration, the locking pin can be driven easily in the cam via the locking elongated hole, and the driven locking pin can be pulled out easily via the locking elongated hole. Therefore, the cam can easily be attached to or detached from the hollow rod.

A fifth feature of the stepwise driving force transmission device in accordance with the present invention is, as described in claim 5, that the hollow rod is provided with through holes leading from the tip end thereof to the guide holes, and is also provided with anchor holes formed coaxially with the through holes from a surface located on the base end side of the hollow rod in the guide holes toward the base end side of the hollow rod, the locking member is composed of a locking pin which is driven into the anchor hole through the through hole, a base end portion thereof on the opposite side to the driven direction projecting into the guide hole, and the cam is provided with a through hole for allowing the locking pin, which is driven into the anchor hole through the through hole, to pass through, and also is provided with a locking groove in a surface facing to the base end side of the hollow rod, such that the locking groove engages with the base end portion of the locking pin to allow the cam to move in the thickness direction of the peripheral wall of the hollow rod and prevent the cam from coming off the guide hole.

According to the above configuration, the locking pin having passed through the through holes of the hollow rod and cam is driven in the anchor hole, so that the cam also functions to prevent the locking pin from coming off. Therefore, the locking pin can surely be prevented from coming off the anchor hole.

A sixth feature of the stepwise driving force transmission device in accordance with the present invention is, as described in claim 6, that a guide surface for converting a force acting due to the contact of the tip end portion of the push pin with the inner edge portion of the cam into a force for moving the cam outward is provided in at least one of the tip end portion of the push pin and the inner edge portion of the cam.

According to the above configuration, since the guide surface is provided in at least one of the tip end portion of the push pin and the inner edge portion of the cam, the cam can be moved smoothly to the outside of the hollow rod by the force acting from the tip end portion of the push pin to the inner edge portion of the cam.

A seventh feature of the stepwise driving force transmission device in accordance with the present invention is, as described in claim 7, that a guide surface for converting a force acting due to the contact of the rising portion of the concave portion of the bush with the outer edge portion of the cam into a force for moving the cam inward is provided in at least one of the rising portion to the inner peripheral surface of the concave portion and the outer edge portion of the cam.

According to the above configuration, since the guide surface is provided in at least one of the rising portion of the concave portion in the bush and the outer edge portion of the cam, the cam can be moved smoothly to the inside of the hollow rod by the force acting from the rising portion of the concave portion to the outer edge portion of the cam.

An eighth feature of the stepwise driving force transmission device in accordance with the present invention is, as described in claim 8, that in the tip end portion of the hollow rod, there is provided a chamfered portion whose diameter is increased gradually from the inner peripheral surface toward the tip end.

According to the above configuration, in the tip end portion of the hollow rod, there is provided a chamfered portion whose diameter increases gradually from the inner peripheral surface toward the tip end. Therefore, even if the axis of the hollow rod and the axis of the push pin are somewhat shifted from each other by a fitting tolerance etc. , the push pin can be introduced surely into the hollow rod.

### Brief Description of the Drawings

Figure 1 is a sectional view of a stepwise driving force transmission device in accordance with a first embodiment of the present invention;
Figure 2 is a view showing a principal portion of the stepwise driving force transmission device shown in Figure 1, Figure 2a being a plan view, and Figure 2b being a sectional view taken along the line B-B of Figure 2a;
Figure 3 is a view showing a cam of the stepwise driving force transmission device shown in Figure 1, Figure 3a being a plan view, and Figure 3b being a sectional view taken along the line B-B of Figure 3a;
Figure 4 is a side view showing a tip end portion of a hollow rod of the stepwise driving force transmission device shown in Figure 1;
Figure 5 is a sectional view showing a die opening state, showing a state in which the stepwise driving force transmission device shown in Figure 1 has been assembled to a molding die;
Figure 6 is a sectional view showing a state in which a die is being closed, showing a state in which the stepwise driving force transmission device shown in Figure 1 has been assembled to the molding die;
Figure 7 is a sectional view showing a state in which a die closing operation further proceeds, showing a state in which the stepwise driving force transmission device shown in Figure 1 has been assembled to the molding die;
Figure 8 is a sectional view showing a die closing state, showing a state in which the stepwise driving force transmission device shown in Figure 1 has been assembled to the molding die;
Figure 9 is a view showing a principal portion of a stepwise driving force transmission device in accordance with a second embodiment of the present invention, Figure 9a being a plan view, and Figure 9b being a sectional view taken along the line B-B of Figure 9a;
Figure 10 is a view showing a principal portion of a stepwise driving force transmission device in accordance with a third embodiment of the present invention, Figure 10a being a plan view, and Figure 10b being a sectional view taken along the line B-B of Figure 10a;
Figure 11 is a view showing a principal portion of a stepwise driving force transmission device in accordance with a fourth embodiment of the present invention, Figure 11a being a plan view, and Figure 11b being a sectional view taken along the line B-B of Figure 11a; and
Figure 12 is a view showing a principal portion of a stepwise driving force transmission device in accordance with a fifth embodiment of the present invention, Figure 12a being a plan view, and Figure 12b being a sectional view taken along the line B-B of Figure 12a;

### Best Mode for Carrying Out the Invention

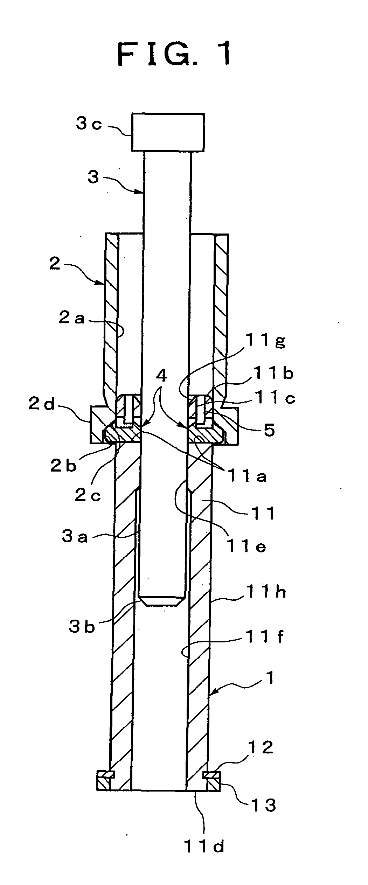

Embodiments of the present invention will now be described with reference to Figures 1 to 12.

### (First Embodiment)

A first embodiment of the present invention will be described with reference to Figures 1 to 8.

As shown in Figures 1 to 8, a stepwise driving force transmission device shown in this embodiment comprises a hollow rod 1, a bush 2, a push pin 3, cams 4, and locking pins (locking members) 5.

As shown in Figure 1, the hollow rod 1 is formed into a cylindrical (tubular) shape, and guide holes 11a passing through a peripheral wall 11 of a tip end portion of the hollow rod 1 in the thickness direction of the peripheral wall 11 are formed. The guide holes 11a are provided at positions separating through 180 degrees in the circumferential direction. Also, from a tip face (tip end) 11b, a through hole 11c reaching the guide hole 11a is formed at a position corresponding to a locking groove 4h of the cam 4, described later, provided in each guide hole 11a. Further, in a base end portion, a shaft retaining snap ring 12 is fixed to the outer peripheral portion of the peripheral wall 11, and a ring-shaped spacer 13, which has been adjusted so as to have a dimension reaching from the snap ring 12 to a base end surface 11d, is fitted to the outer peripheral portion on the base end side of the snap ring 12.

The inner surface of the hollow rod 1 forms an inner peripheral surface 11e on which the tip end side portion thereof having the guide holes 11a fits slidably to an outer peripheral surface 3a of the push pin 3, described later, and a portion on the base end side from the inner peripheral surface 11e forms a flank 11f having an increased diameter so as to avoid the contact with the outer peripheral surface 3a of the push pin 3. Further, the tip end portion of the hollow rod 1 is provided with a taper-shaped chamfered portion 11g whose diameter is increased gradually from the inner peripheral surface 11e toward the tip face 11b. The chamfered portion 11g and the inner peripheral surface 11e are formed continuously by an arc-shaped smooth surface. A corner portion of the tip face 11b and an outer peripheral surface 11h is chamfered into an arcuate shape.

The bush 2 is formed into a cylindrical shape (tubular shape), and formed so that an inner peripheral surface 2a thereof fits slidably to the outer peripheral surface 11h of the hollow rod 1. Also, the bush 2 is provided with a concave portion 2b, which has an increased diameter so as to receive outer edge portions 4b of the cams 4 projected outward by the outer peripheral surface 3a of the push pin 3, described later, at the inner periphery of the base end portion located on the same side as the base end side of the hollow rod 1 in a state in which the bush 2 fits with the hollow rod 1. The concave portion 2b has a bottom portion formed so as to have a fixed diameter from the base end surface of the bush 2 toward the tip end side thereof, and a rising portion from the bottom portion to the inner peripheral surface 2a forms a tapered guide surface 2c which has a diameter decreasing gradually toward the tip end side and leads to the inner peripheral surface 2a. Also, at a position corresponding to the concave portion 2b at the outer periphery of the base end portion of the bush 2, a flange portion 2d is formed so as to project annularly outward.

The push pin 3 is formed into a rod shape having a circular cross section, and formed so that the outer peripheral surface 3a thereof fits slidably to the inner peripheral surface 11e of the hollow rod 1. Also, in the tip end portion of the push pin 3, a tapered guide surface 3b is provided so that the diameter thereof decreases gradually from the outer peripheral surface 3a toward the tip end, and in the base end portion thereof, a flange portion 3c is provided so as to project annularly outward.

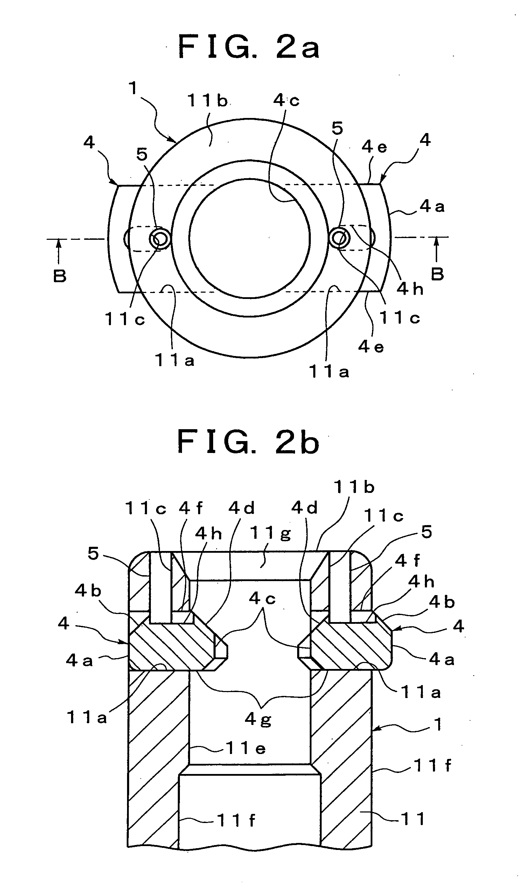

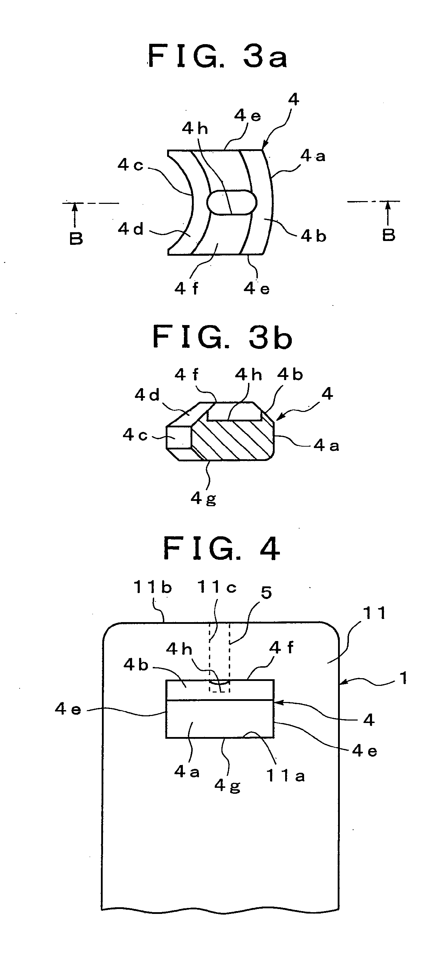

The cam 4 is, as shown in Figures 2a, 2b, 3a and 3b, provided in each guide hole 11a of the hollow rod 1 in a state of movable in the thickness direction of the peripheral wall 11 of the hollow rod 1, and is configured so that the position of an outer edge 4a is regulated by the inner peripheral surface 2a of the bush 2, so that an inner edge portion 4d is projected inward from the inner peripheral surface 11e of the hollow rod 1 when the whole of the cam 4 moves inward (refer to the left-hand side cam 4 in Figure 2b), and the position of an inner edge 4c is regulated by the outer peripheral surface 3a of the push pin 3, so that the outer edge portion 4b is projected outward from the outer peripheral surface 11h of the hollow rod 1 when the whole of the cam 4 moves outward (refer to the right-hand side cam 4 in Figure 2b).

The outer edge 4a of each cam 4 is formed by an arcuately curved surface having almost the same curvature as that of the inner peripheral surface 2a of the bush 2, and the inner edge 4c thereof is formed by an arcuately curved surface having almost the same curvature as that of the outer peripheral surface 3a of the push pin 3. Also, for the cam 4, side surfaces 4e connecting the circumferential ends of the outer edge 4a and the inner edge 4c are formed in parallel with each other, and a tip end surface 4f directed to the tip end side of the hollow rod 1 and a base end surface 4g directed to the base end side of the hollow rod 1 are also formed in parallel with each other. That is to say, the cam 4 is formed into a rectangle shape in cross section in the case where the cam 4 is cut by a plane intersecting perpendicularly to the side surface 4e and the tip end surface 4f. Therefore, as shown in Figure 4, the cam 4 is configured so that a shape viewed from the side of the hollow rod 1 (that is, a shape viewed from the outer edge 4a side) is a rectangle shape, and the guide hole 11a for guiding the cam 4 in the thickness direction of the peripheral wall 11 of the hollow rod 1 also has a rectangle shape viewed from the side thereof.

Also, in the tip end surface 4f of the cam 4, there is formed the locking groove 4h to which the tip end portion of the locking pin 5, described later, engages. The locking groove 4h is formed long along the central portion between both of the side surfaces 4e so as to allow the cam 4 to move in the thickness direction of the peripheral wall 11 of the hollow rod 1, and the length thereof is set so that the locking groove 4h engages with the tip end portion of the locking pin 5 to prevent the cam 4 from coming off to the inside or the outside of the hollow rod 1.

The locking pin 5 is formed by a spring pin, and is driven so as to be pressed in the through hole 11c from the tip face 11b of the hollow rod 1. The tip end portion in the driven direction of the locking pin 5 projects in the guide hole 11a, and engages with the locking groove 4h of the cam 4. Also, the tip end portion of the locking pin 5 is engaged with the locking groove 4h in an optimum state by driving the locking pin 5 so that the base end surface thereof is flush with the tip face 11b of the hollow rod 1.

Also, both of the tip end portion of the push pin 3 and the inner edge portion 4d of the cam 4 are provided with a guide surface for converting a force acting due to the contact of the tip end portion of the push pin 3 with the inner edge portion 4d of the cam 4 into a force for moving the cam 4 outward, respectively. Specifically, in the tip end portion of the push pin 3, the above-described tapered guide surface 3b is formed, and in the inner edge portion 4d of the cam 4, a tapered guide surface having an angle coinciding with the guide surface 3b of the push pin 3 inserted in the hollow rod 1 is formed. In the inner edge portion 4d of the cam 4, a guide surface that has an angle coinciding with the guide surface 3b of the push pin 3 inserted from the tip end side of the hollow rod 1 is formed on the tip end surface 4f side, and a guide surface that has an angle coinciding with the guide surface 3b of the push pin 3 inserted from the base end side of the hollow rod 1 is also formed on the base end surface 4g side.

Further, both of the rising portion in the concave portion 2b of the bush 2 and the outer edge portion 4b of the cam 4 are provided with a guide surface for converting a force acting due to the contact of the rising portion of the concave portion 2b with the outer edge portion 4b of the cam 4 into a force for moving the cam 4 inward, respectively. Specifically, the rising portion of the concave portion 2b is formed by the above-described tapered guide surface 2c, and in the outer edge portion 4b of the cam 4, a tapered guide surface that has an angle coinciding with the guide surface 2c of the bush 2 fitted from the tip end side of the hollow rod 1 is formed on the tip end surface 4f side.

The above-described guide surface may be provided in only one of the tip end portion of the push pin 3 and the inner edge portion 4d of the cam 4. However, the guide surface should preferably be provided in both portions in order to make the movement of the cam 4 smooth. The same is true for the rising portion in the concave portion 2b of the bush 2 and the outer edge portion 4b of the cam 4.

If the guide surface is provided in one of the tip end portion of the push pin 3 and the inner edge portion 4d of the cam 4, the guide surface should preferably be provided in the tip end portion of the push pin 3 because of ease of insertion into the hollow rod 1. Also, if the guide surface is provided in one of the rising portion in the concave portion 2b of the bush 2 and the outer edge portion 4b of the cam 4, the guide surface should preferably be provided in the rising portion in the concave portion 2b because of ease of fitting to the outer peripheral surface 11h of the hollow rod 1.

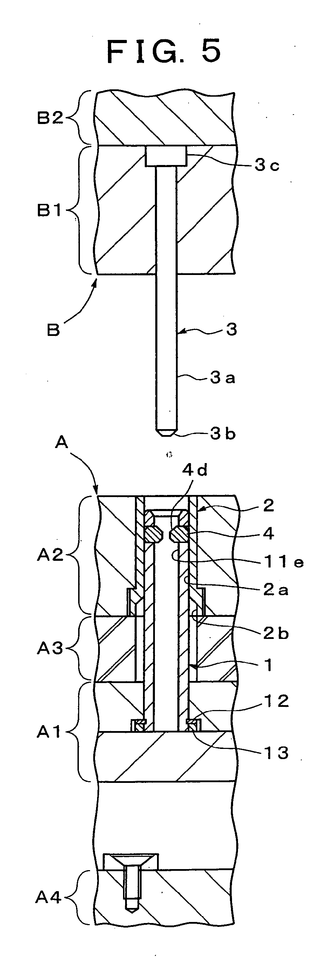

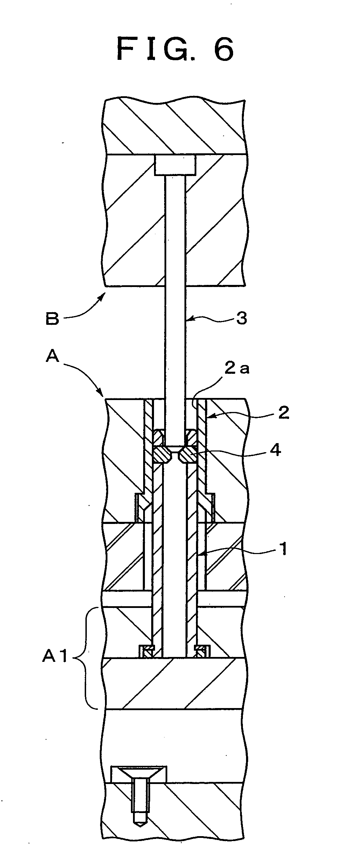

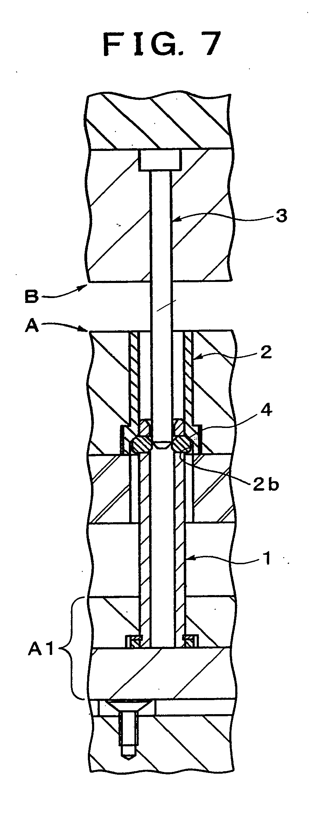

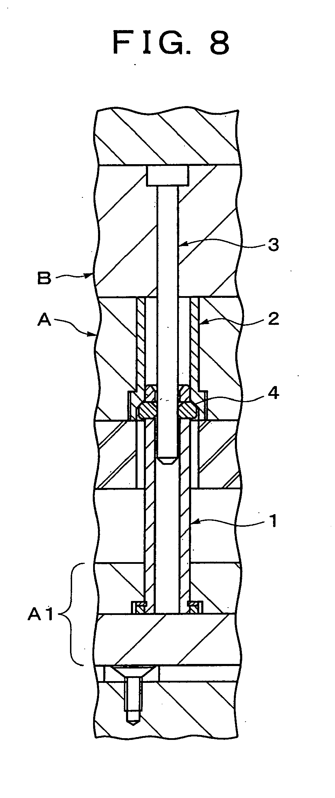

In the stepwise driving force transmission device configured as described above, as shown in Figure 5, the hollow rod 1 and the bush 2 are fitted to each other such that the cams 4 are located on the inner peripheral surface 2a of the bush 2. When the push pin 3 is inserted into the hollow rod 1 from the tip face 11b side of the hollow rod 1, since the inner edge portions 4d of the cams 4 are projected inward from the inner peripheral surface 11e of the hollow rod 1 by the bush 2, as shown in Figure 6, the driving force of the push pin 3 is transmitted to the hollow rod 1 via the cams 4, and hence the hollow rod 1 moves toward the base end side thereof. In other words, the hollow rod 1 is driven so as to be moved relative to the bush 2. As shown in Figures 7 and 8, when the portion having the cams 4 of the hollow rod 1 reaches the concave portion 2b in the base end portion of the bush 2, the cams 4 are projected into the concave portion 2b by the push pin 3, so that the driving force acting on the hollow rod 1 from the push pin 3 is released and only the push pin 3 enters into the hollow rod 1. That is to say, although the push pin 3 moves continuously, the driving force acting on the hollow rod 1 from the push pin 3 is completely released from the time when the hollow rod 1 reaches a predetermined position with respect to the bush 2.

For example, as shown in Figures 5 to 8, the base end portion of the hollow rod 1 is fixed to an ejector plate A1 of a moving die A in a molding die of an injection molding machine, so that the tip end portion of the hollow rod 1 is directed to a fixed die B side of the molding die. The bush 2 is fixed to a moving side template A2 at a position closest to the fixed die B in the moving die A, so that the base end portion of the bush 2 is directed to the ejector plate A1 side, and the tip end portion of the hollow rod 1 driven by the ejector plate A1 can be received by the bush 2. The base end portion of the push pin 3 is fixed by a fixed side template B1 and a fixed side mounting plate B2 of the fixed die B, so that the tip end side portion of the push pin 3 is projected from the fixed die B to the moving die A side, and the push pin 3 is inserted into the hollow rod 1 via the bush 2 at the time of die closing. By the structure mentioned above, the stepwise driving force transmission device can be allowed to function as a quick return device for the ejector plate.

In Figures 5 to 8, reference character A3 denotes a backing plate provided in the moving die A, and reference character A4 denotes a moving side mounting plate provided in the moving die A.

In the stepwise driving force transmission device assembled as the quick return device for the ejector plate, when a die opening state in which the fixed die B and the moving die A face to each other with a predetermined distance being provided therebetween is formed as shown in Figure 5, the push pin 3 is completely drawn from the hollow rod 1 and the bush 2. When an ejector rod (not shown) of the injection molding machine advances from such a state, the ejector plate A1 moves in the ejecting direction, so that the tip end portion of the hollow rod 1 moves to the tip end side in the bush 2.

That is to say, since the push pin 3 is not present in the hollow rod 1 as described above, the cams 4 can be moved from the concave portion 2b of the bush 2 to the inside of the hollow rod 1, so that the hollow rod 1 is moved smoothly to the tip end side in the bush 2 by being driven by the ejector plate A1. Also, an ejector pin (not shown) connected to the ejector plate A1 ejects from the moving die A to the fixed die B side, so that a molding product (not shown) adhering to a molding surface (not shown) of the moving die A can be separated from the molding surface.

Next, when the ejector rod of the injectionmoldingmachine is retracted, usually, the ejector plate A1 is automatically returned to the return position before ejection by a return spring (not shown) incorporated in the moving die A. Therefore, the hollow rod 1 becomes in such a state that the tip end portion thereof moves to the base end side of the bush 2, and a portion having the cams 4 moves to a position corresponding to the concave portion 2b of the bush 2.

On the other hand, when the die is closed by moving the moving die A toward the fixed die B, the push pin 3 enters into the hollow rod 1 through the bush 2. In this case, the portion having the cams 4 of the hollow rod 1 is moved to a position corresponding to the concave portion 2b of the bush 2 by the return spring (differing from Figures 6 to 8), so that the push pin 3 pushes out the cams 4 to the outside of the hollow rod 1, and can easily enter into the hollow rod 1.

In the case where the ejector plate A1 is immediately returned by the return spring in such a manner, the stepwise driving force transmission device does not function as the quick return device for the ejector plate A1.

However, if the return spring is broken or weakened, and hence the ejector plate A1 sometimes does not return or returns slowly, as shown in Figures 5 and 6, the cams 4 sometimes remain on the inner peripheral surface 2a of the bush 2 in the die closing process.

In this case, the tip end portion of the push pin 3 comes into contact with the cams 4, and a force that pushes back the hollow rod 1 to the base end side of the bush 2 via the cams 4 acts, so that as shown in Figure 7, the ejector plate A1 moves to the return position. When the ejector plate A1 has returned to the return position in such a manner, the portion having the cams 4 of the hollow rod 1 comes to a position corresponding to the concave portion 2b of the bush 2, so that the cams 4 can be moved to the outside of the hollow rod 1. Therefore, as shown in Figure 8, the force acting on the hollow rod 1 via the cams 4 is released, and the push pin 3 enters into the hollow rod 1.

Thus, the ejector plate A1 can be returned to the return position surely without applying an abnormal force to the molding die, and even if the return spring etc. have a trouble, the ejector pin etc. can be prevented from being damaged.

On the other hand, the above-described stepwise driving force transmission device can be allowed to function as a two-stage ejecting device for the ejector pin by being assembled in the molding die as described above.

Also, in the above-described stepwise driving force transmission device, the cam 4 is provided with the locking pin 5 to prevent the cam 4 from coming off the guide hole 11a of the hollow rod 1, which provides an advantage that the stepwise driving force transmission device can be assembled in the molding die easily. In addition, the configuration is such that the locking pin 5 is inserted from the tip face 11b side of the hollow rod 1, so that there is no hindrance to the fitting of the hollow rod 1 and the bush 2 and the fitting of the hollow rod 1 and the push pin 3.

Furthermore, the locking pin 5 is driven from the tip face 11b of the hollow rod 1 in such a state that the cam 4 is inserted in the guide hole 11a, by which the tip end portion of the locking pin 5 can be engaged with the locking groove 4h of the cam 4. Therefore, the cam 4 can be assembled easily so that the cam 4 is prevented from coming off the guide hole 11a.

Also, the construction is such that the peripheral wall 11 is allowed to remain between the guide holes 11a and the tip face 11b by providing the guide holes 11a in the tip end portion of the hollow rod 1, so that a decrease in strength of the tip end portion of the hollow rod 1 due to the provision of the guide holes 11a can be restrained as far as possible. That is to say, the strength of the tip end portion of the hollow rod 1 can be increased as compared with the case where a concave-shaped groove is formed from the tip face 11b of the hollow rod 1 toward the base end surface 11d side (base end side), and the guide holes are formed in this groove portion.

Furthermore, since the guide surface is provided in both of the tip end portion of the push pin 3 and the inner edge portion 4d of the cam 4, the cam 4 can be moved smoothly to the outside of the hollow rod 1 by the force acting from the tip end portion of the push pin 3 to the inner edge portion 4d of the cam 4. Similarly, since the guide surface is provided in both of the rising portion of the concave portion 2b in the bush 2 and the outer edge portion 4b of the cam 4, the cam 4 can be moved smoothly to the inside of the hollow rod 1 by the force acting from the rising portion of the concave portion 2b to the outer edge portion 4b of the cam 4.

Also, in the tip end portion of the hollow rod 1, there is provided a chamfered portion 11g whose diameter increases gradually from the inner peripheral surface 11e toward the tip face 11b. Therefore, even if the axis of the hollow rod 1 on the moving die A side and the axis of the push pin 3 on the fixed die B side are somewhat shifted from each other by a fitting tolerance etc., the push pin 3 can be introduced surely into the hollow rod 1.

### (Second Embodiment)

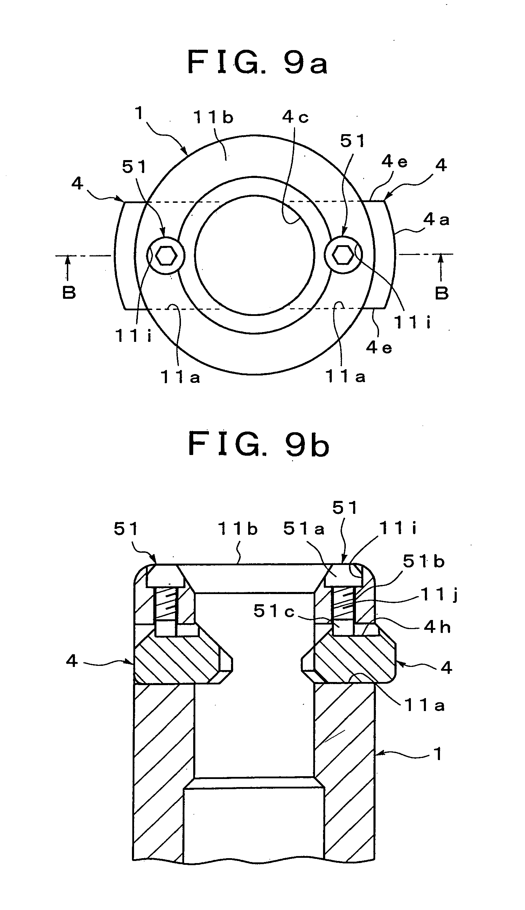

Next, a second embodiment of the present invention will be described with reference to Figures 9a and 9b. The same reference characters are applied to elements that are common to the elements shown in the first embodiment, and the explanation thereof is simplified.

The stepwise driving force transmission device shown in this embodiment is different from that shown in the first embodiment mainly in that a locking screw 51 is provided in place of the locking pin 5.

Specifically, as shown in Figures 9a and 9b, the hollow rod 1 is provided with countersunk concave portions 11i and screw holes 11j formed coaxially and successively from the tip face 11b toward the guide holes 11a. The countersunk concave portion 11i is formed so as to have a depth capable of receiving the whole of a head portion 51a of the locking screw 51, described later. Each screw hole 11j is provided at a position corresponding to the locking groove 4h of the cam 4 inserted in the guide hole 11a, and is formed so as to pass through the guide hole 11a.

The locking screw 51 is composed of a hexagon socket head bolt having the head portion 51a and an externally threaded portion 51b, and is formed so that a tip end portion 51c projecting in the guide hole 11a engages with the locking groove 4h of the cam 4. That is to say, the tip end portion 51c is formed by a columnar body whose diameter is decreased to a valley diameter or smaller of the externally threaded portion 51b.

In the stepwise driving force transmission device configured as described above, the locking screw 51 is screwed and tightened in the screw hole 11j from the tip face 11b of the hollow rod 1, so that the tip end portion 51c in the screwing direction is projected in the guide hole 11a, and is engaged with the locking groove 4h of the cam 4. Accordingly, the cam 4 moves freely in the guide hole 11a in the thickness direction of the peripheral wall 11 of the hollow rod 1, and becomes in a state of being prevented from coming off the guide hole 11a.

Also, merely by turning the locking screw 51, the cam 4 can be assembled easily, and also can be replaced easily as necessary.

### (Third Embodiment)

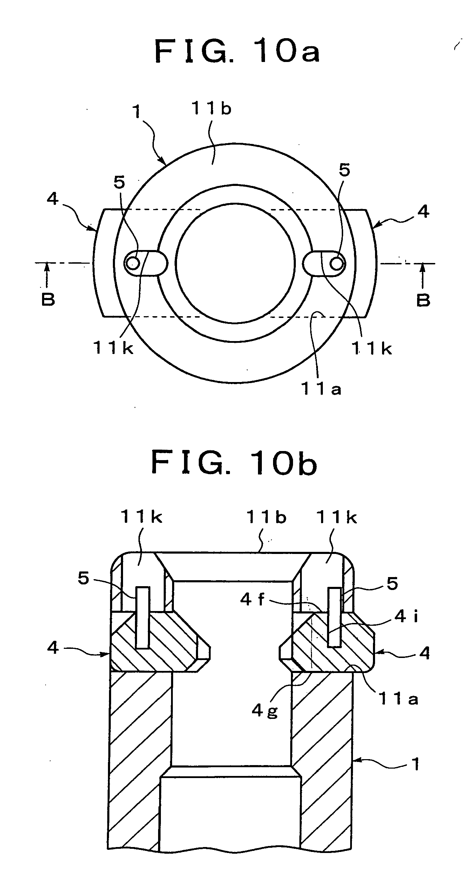

Next, a third embodiment of the present invention will be described with reference to Figures 10a and 10b. The same reference characters are applied to elements that are common to the elements shown in the first embodiment, and the explanation thereof is simplified.

The stepwise driving force transmission device shown in this embodiment is different from that shown in the first embodiment mainly in that a locking elongated hole 11k is provided in place of the through hole 11c, and the locking pin 5 is driven to the cam 4 without providing the locking groove 4h.

Specifically, as shown in Figures 10a and 10b, the hollow rod 1 is provided with the locking elongated holes 11k that pass through from the tip face 11b to the guide holes 11a and are formed long along the thickness direction in which the cams 4 inserted in the guide hole 11a move.

The cam 4 is provided with a locking hole 4i for fixing the locking pin 5 under pressure in place of the locking groove 4h. The locking hole 4i is formed so as to be directed from the tip end surface 4f toward the base end surface 4g of the cam 4.

The locking pin 5 is driven into the locking hole 4i of the cam 4 through the locking elongated hole 11k, and the base end portion on the opposite side to the driven direction projects into the locking elongated hole 11k, so that the cam can be moved in the thickness direction of the peripheral wall 11, and the cam 4 is prevented from coming off the guide hole 11a. The locking pin 5 is composed of a spring pin as described above.

In the stepwise driving force transmission device configured as described above, the locking pin 5 can easily be driven into the locking hole 4i of cam 4 via the locking elongated hole 11k, and also the locking pin 5 having been driven can easily be pulled out via the locking elongated hole 11k. Therefore, the cam 4 can easily be attached to or detached from the hollow rod 1.

### (Fourth Embodiment)

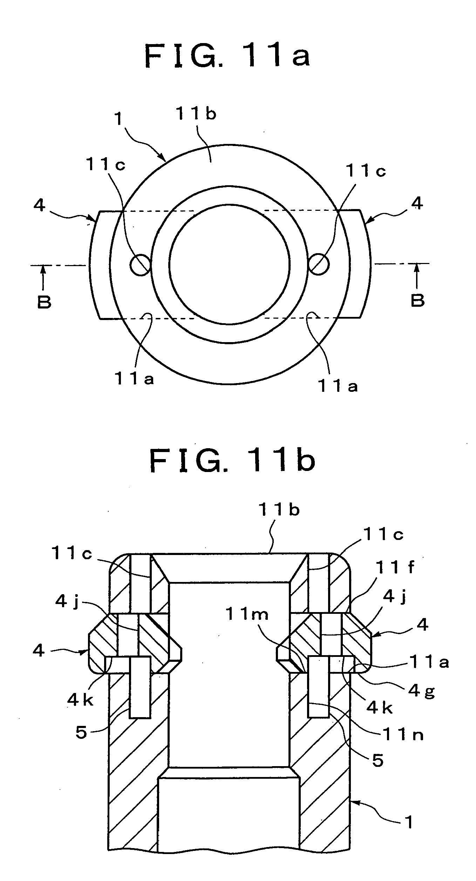

Next, a fourth embodiment of the present invention will be described with reference to Figures 11a and 11b. The same reference characters are applied to elements that are common to the elements shown in the first embodiment, and the explanation thereof is simplified.

The stepwise driving force transmission device shown in this embodiment is different from that shown in the first embodiment mainly in that the locking pin 5 is provided on the inside of the guide hole 11a.

Specifically, as shown in Figures 11a and 11b, the hollow rod 1 is provided with the through holes 11c leading from the tip face 11b thereof to the guide holes 11a, and is also provided with anchor holes 11n formed coaxially with the through holes 11c from a bottom surface (surface) 11m located on the base end side of the hollow rod 1 in the guide holes 11a toward the base end side of the hollow rod 1.

The locking pin 5 is driven into the anchor hole 11n through the through hole 11c and a through hole 4j, described later, of the cam 4, and the base end portion on the opposite side to the driven direction projects into the guide hole 11a. The locking pin 5 is composed of a spring pin as described above.

The cam 4 is provided with the through hole 4j for allowing the locking pin 5, which is driven into the anchor hole 11n through the through hole 11c of the hollow rod 1, to pass through. Also, the cam 4 is not provided with the above-described locking groove 4h in the tip end surface 4f, and is provided with a locking groove 4k in the base end surface 4g. The locking groove 4k has the same function as that of the locking groove 4h. Specifically, the locking groove 4 k engages with the base end portion of the locking pin 5 to allow the cam 4 to move in the thickness direction in the guide hole 11a, and also is formed long in the thickness direction of the peripheral wall 11 to prevent the cam 4 from coming off the guide hole 11a.

In the stepwise driving force transmission device configured as described above, the locking pin 5 having passed through the through holes 11c and 4j of the hollow rod 1 and the cam 4 is driven into the anchor hole 11n, so that the cam 4 also functions to prevent the locking pin 5 from coming off. Therefore, the locking pin 5 can surely be prevented from coming off the anchor hole 11n.

### (Fifth Embodiment)

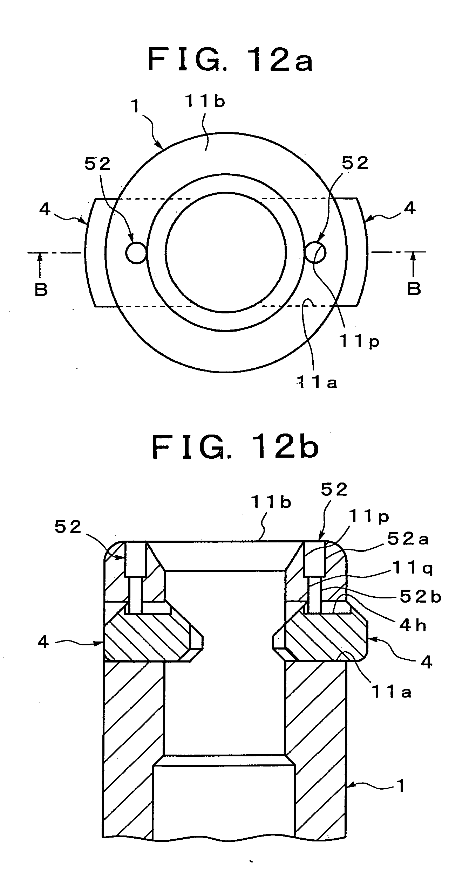

Next, a fifth embodiment of the present invention will be described with reference to Figures 12a and 12b. The same reference characters are applied to elements that are common to the elements shown in the first embodiment, and the explanation thereof is simplified.

The stepwise driving force transmission device shown in this embodiment is different from that shown in the first embodiment mainly in that a solid pin 52 is provided in place of the locking pin 5 composed of a spring pin.

Specifically, the hollow rod 1 is provided with large-diameter holes 11p and small-diameter holes 11q formed coaxially and successively from the tip face 11b toward the guide holes 11a. The small-diameter hole 11q communicates with the guide hole 11a.

The pin 52 has a large-diameter portion 52a and a small-diameter portion 52b each having a circular shape in cross section, which are formed coaxially and integrally. The large-diameter portion 52a and the small-diameter portion 52b are pressed in the large-diameter hole 11p and the small-diameter hole 11q, respectively. Theconfigurationmay be such that the small-diameter portion 52b is merely inserted in the small-diameter hole 11q.

The axial length of the large-diameter portion 52a substantially coincides with the depth of the large-diameter hole 11p, so that when the large-diameter portion 52a is driven into the large-diameter hole 11p, the end face thereof is flush with the tip face 11b of the hollow rod 1.

The axial length and diameter of the small-diameter portion 52b are set so that the tip end portion thereof projects into the guide hole 11a and engages with the locking groove 4h of the cam 4 in the state in which the large-diameter portion 52a has been driven completely into the large-diameter hole 11p.

In the stepwise driving force transmission device configured as described above, the pin 52 is not formed by a hollow pin such as a spring pin but is formed by a solid pin, so that the portion to be engaged with the locking groove 4h of the cam 4 can be formed by the small-diameter portion 52b, and the portion to be fixed under pressure to the hollow rod 1 can be formed by the large-diameter portion 52a. That is to say, the portion to be fixed by pressing of the pin 52 can be formed so as to have a large diameter as compared with the portion to be engaged with the locking groove 4h, so that the pin 52 can be fixed more firmly to the hollow rod 1.

### Industrial Applicability

As explained above, according to a first feature of the present invention, the locking members can prevent the cams from coming off the guide holes of the hollow rod, which offers an advantage that the assembling to the molding die becomes easy. In addition, since the locking members are inserted from the tip end side of the hollow rod, there is no hindrance to the fitting of the hollow rod and the bush and the fitting of the hollow rod and the push pin.

Also, the peripheral wall is allowed to remain between the guide holes and the tip end of the hollow rod by providing the guide holes in the tip end portion of the hollow rod, so that a decrease in strength of the tip end portion of the hollow rod due to the provision of the guide holes can be prevented as far as possible. That is to say, the strength of the tip end portion of the hollow rod can be increased as compared with the case where a concave-shaped groove is formed from the tip end of the hollow rod toward the base end side, and the guide holes are formed in this groove portion.

According to a second feature of the present invention, by driving the locking pin from the tip end of the hollow rod such that the cam is inserted in the guide hole, the tip end portion of the locking pin can be engaged with the locking groove of the cam. Therefore, the cam can be assembled easily so as to prevent the cam from coming off the guide hole.

Also, according to a third feature of the present invention, by screwing the locking screw from the tip end of the hollow rod such that the cam is inserted in the guide hole, the tip end portion of the locking screw can be engaged with the locking groove of the cam. Therefore, the cam can be assembled easily so as to prevent the cam from coming off the guide hole. In addition, the tip end portion of the locking screw can be disengaged from the locking groove of the cam by turning the locking screw, which provides an advantage that the cam can be replaced easily.

Also, according to a fourth feature of the present invention, the locking pin can be driven easily in the cam via the locking elongated hole, and the driven locking pin can be pulled out easily via the locking elongated hole. Therefore, the cam can easily be attached to or detached from the hollow rod.

Further, according to a fifth feature of the present invention, the locking pin having passed through the through holes of the hollow rod and cam is driven in the anchor hole, so that the cam also functions to prevent the locking pin from comingoff. Therefore, the locking pin can surely be prevented from coming off the anchor hole.

According to a sixth feature of the present invention, since the guide surface is provided in at least one of the tip end portion of the push pin and the inner edge portion of the cam, the cam can be moved smoothly to the outside of the hollow rod by the force acting from the tip end portion of the push pin to the inner edge portion of the cam.

Also, according to a seventh feature of the present invention, since the guide surface is provided in at least one of the rising portion of the concave portion in the bush and the outer edge portion of the cam, the cam can be moved smoothly to the inside of the hollow rod by the force acting from the rising portion of the concave portion to the outer edge portion of the cam.

Also, according to an eighth feature of the present invention, in the tip end portion of the hollow rod, there is provided a chamfered portion whose diameter increases gradually from the inner peripheral surface toward the tip end. Therefore, even if the axis of the hollow rod and the axis of the push pin are somewhat shifted from each other by a fitting tolerance etc. , the push pin can be introduced surely into the hollow rod.

## Claims

1. A stepwise driving force transmission device comprising:
a hollow rod of a tubular shape having guide holes passing through a peripheral wall of a tip end portion thereof in a thickness direction of the peripheral wall;
a bush having an inner peripheral surface fitted to a outer peripheral surface of the hollow rod;
a push pin having an outer peripheral surface fitted to the inner peripheral surface of the hollow rod; and
cams which are provided in the guide holes of the hollow rod so as to be movable in the thickness direction, and are configured so that when an outer edge thereof is moved inward by the inner peripheral surface of the bush, an inner edge portion thereof projects inward from the inner peripheral surface of the hollow rod, and when an inner edge thereof is moved outward by the outer peripheral surface of the push pin, an outer edge portion thereof projects outward from the outer peripheral surface of the hollow rod, wherein
the bush is provided with a concave portion, which receives the outer edge portion of the cams projected outward by the outer peripheral surface of the push pin, at a inner periphery of a base end portion located on the same side as a base end portion of the hollow rod when the bush is fitted to the hollow rod, and
the hollow rod is provided with locking members which are inserted from the tip end of the hollow rod to engage the cams, and are configured so as to allow the cams to move in the thickness direction and to prevent the cams from coming off the guide holes.

2. The stepwise driving force transmission device according to claim 1, wherein
the locking member is composed of a locking pin which is driven from the tip end of the hollow rod, and a tip end portion thereof in the driven direction projects into the guide hole, and
the cam is provided with a locking groove in a surface facing to the tip end side of the hollow rod, such that the locking groove engages with the tip end portion of the locking pin to allow the cam to move in the thickness direction of the peripheral wall of the hollow rod and prevent the cam from coming off the guide hole.

3. The stepwise driving force transmission device according to claim 1, wherein
the locking member is composed of a locking screw which is screwed in from the tip end of the hollow rod, and a tip end portion thereof in the screwed direction projects into the guide hole, and
the cam is provided with a locking groove in a surface facing to the tip end side of the hollow rod, such that the locking groove engages with the tip end portion of the locking screw to allow the cam to move in the thickness direction of the peripheral wall of the hollow rod and prevent the cam from coming off the guide hole.

4. The stepwise driving force transmission device according to claim 1, wherein
the hollow rod is provided with locking elongated holes which pass through from a tip end thereof to the guide holes, and are formed long along the thickness direction in which the cam moves, and
the locking member is composed of a locking pin which is driven into the cam through the locking elongated hole, a base end portion thereof on the opposite side to the driven direction projecting into the locking elongated hole, and allows the cam to move in the thickness direction and prevents the cam from coming off the guide hole.

5. The stepwise driving force transmission device according to claim 1, wherein
the hollow rod is provided with through holes leading from the tip end thereof to the guide holes, and is also provided with anchor holes formed coaxially with the through holes from a surface located on the base end side of the hollow rod in the guide holes toward the base end side of the hollow rod,
the locking member is composed of a locking pin which is driven into the anchor hole through the through hole, a base end portion thereof on the opposite side to the driven direction projecting into the guide hole, and
the cam is provided with a through hole for allowing the locking pin, which is driven into the anchor hole through the through hole, to pass through, and also is provided with a locking groove in a surface facing to the base end side of the hollow rod, such that the locking groove engages with the base end portion of the locking pin to allow the cam to move in the thickness direction of the peripheral wall of the hollow rod and prevent the cam from coming off the guide hole.

6. The stepwise driving force transmission device according to claim 1, wherein
a guide surface for converting a force acting due to the contact of the tip end portion of the push pin with the inner edge portion of the cam into a force for moving the cam outward is provided in at least one of the tip end portion of the push pin and the inner edge portion of the cam.

7. The stepwise driving force transmission device according to claim 1, wherein
a guide surface for converting a force acting due to the contact of the rising portion of the concave portion of the bush with the outer edge portion of the cam into a force for moving the cam inward is provided in at least one of the rising portion of the concave portion and the outer edge portion of the cam.

8. The stepwise driving force transmission device according to claim 1, wherein
in the tip end portion of the hollow rod, there is provided a chamfered portion whose diameter is increased gradually from the inner peripheral surface toward the tip end.
